# EUROPEAN PATENT SPECIFICATION

(11) **EP 2 017 810 B1**
(45) Date of publication and mention of the grant of the patent: **28.08.2013**
(21) Application number: 06743474.6
(22) Date of filing: 10.05.2006
(51) Int. Cl.: G09F 3/02, B32B 27/08, G09F 3/10

(54) **LABEL FOR RETURNABLE CONTAINERS**
ETIKETT FÜR ZURÜCKGEBBARE BEHÄLTER
ÉTIQUETTE POUR CONTENEURS SUSCEPTIBLES D'ÊTRE RETOURNÉS

(43) Date of publication of application: 21.01.2009
(73) Proprietor: Santiago Valverde Savasa Impresores, S.a., 20170 Ursurbil (ES)
(72) Inventor: VALVERDE INCHAURRAUNDIETA, Santiago, E-20170 Usurbil (guipuzcoa) (ES)
(74) Representative: Carpintero Lopez, Francisco
(86) International application number: PCT/ES2006/000233
(87) International publication number: WO 2007/128846

(56) References cited:
- EP-A2- 0 951 004
- WO-A1-01/75844
- WO-A1-2005/064575
- GB-A- 2 411 880
- US-B1- 6 680 097
- US-B2- 6 663 746

## Description

### FIELD OF THE INVENTION

The present invention refers to labels for returnable containers, in particular for returnable bottles and, more specifically, for returnable glass or plastic bottles, i.e. glass or plastic bottles which, once the product they hold has been consumed, return to the bottler, who, after a bottle washing process, markets them again with a fresh product. Examples of returnable bottles are some of those used for bottling beers, soft drinks and mineral waters.

### BACKGROUND OF THE INVENTION

Glass bottle labelling processes are already known. These processes are called "cold glue labelling". In this type of labelling, the label is stuck to the glass bottle by means of a glue or adhesive compound which is applied at ambient temperature, although it is sometimes necessary to temper this adhesive compound in order to achieve good rheological properties. These adhesive compounds are primarily based on casein and its by-products or on synthetic resins, such as acrylic and polyvinyl acetate based resins and their mixtures.

In the case of returnable glass bottles, i.e. those that may be re-used after the product they contain has been consumed, it is necessary to carry out a process of washing the bottle to be re-used. This washing process includes detaching the label stuck to the bottle.

The process of washing the so-called returnable bottles is carried out on specific machines, normally using a bath of sodium hydroxide at an approximate concentration of 2% at a temperature of 75-85°. In these conditions the water containing sodium hydroxide penetrates through the label and by attacking the adhesive causes the label to be come detached.

Until very recently, labels were made on a paper carrier, as paper labels were the only ones that allowed the sodium hydroxide solution to penetrate through them. However, plastic material labels had never been made for returnable bottles, as this type of carrier did not permit the penetration of the bath of sodium hydroxide or equivalent to remove the casein.

Labels have recently begun to be made on plastic carriers. For example, the United States patent US-6663746-B2 describes a method of adhesion of a plastic polymer label to a glass, plastic or metal bottle by means of an adhesive composition. These labels made on a polymer or plastic carrier offer many advantages over the former paper-based labels. Some of these advantages are resistance to humidity, the rate at which they may be set in place on the bottles or other containers, as well as the wide variety of decorative options that they offer, including the possibility of obtaining transparent labels. To achieve good adhesion between the label and the container surface, a layer of hydrophilic material is applied.

However, the process of detaching known plastic film based labels is rather complicated, especially when the washing of the container or bottle takes place a long time after the container or bottle has been labelled, as the adhesion strength achieved between the container or bottle is very high.

Patent US - 6680097 B1 described a label which can be removed by not wash fluid, which includes a heat shrinkable plastic layer and an adhesion promoter layer.

### OBJECT OF THE INVENTION

The present invention sets out to resolve the above-mentioned problems stemming from already known labels based on plastic polymer by means of making a label based on a film which, due to its special shrinkage or retraction features in certain temperatures, enables it to be removed from containers even in the event of the label having been stuck to the surface of the container a long time beforehand, thereby making the container easily returnable. In addition, the label of the present invention provides a good process of curing of the glues used in the labelling of returnable glass or plastic containers or bottles.

### SUMMARY OF THE INVENTION

In one aspect of the present invention, a label is provided for being stuck to a container by means of an adhesive compound and for detachment from said container by means of the application of a hot washing fluid, which comprises a layer of thermal shrinkage material, a film with a hygroscopic coating capable of absorbing at least part of the water of the adhesive compound whereby the label is stuck to the container, and a film of warm melt material configured to be placed between the layer of thermal shrinkage material and the film of hygroscopic coating, so that the softening of the film of warm melt material enables the layer of thermal shrinkage material to retract in at least one direction upon coming into contact with the hot washing fluid. This makes it possible to use conventional adhesives to stick the label to the container.

Furthermore, another aspect of the present invention provides a method of manufacturing said label.

A final aspect of the present invention refers to a device for making said label.

### DESCRIPTION OF THE DRAWINGS

To supplement the description that is being given and in order to assist in a clearer understanding of the features of the invention, in accordance with a preferred practical embodiment of the same, a set of drawings is adjoined as an integral part of said description, wherein there is represented on an informative and non-restrictive basis the following:
Figure 1 shows a cross section of a label (1) according to one embodiment of the present invention.
Figure 2 shows a cross section of a label (1) according to another embodiment of the present invention.
Figure 3 shows an example of detachment by thermal shrinkage of the label that is the object of the invention, stuck to a bottle.
Figure 4 shows a detailed example of the detachment by thermal shrinkage of the label that is the object of the invention, stuck to a bottle.

### DETAILED DESCRIPTION OF THE INVENTION

With reference to the figures, we now go on to describe the different modes of embodiment of the label (1) of the present invention.

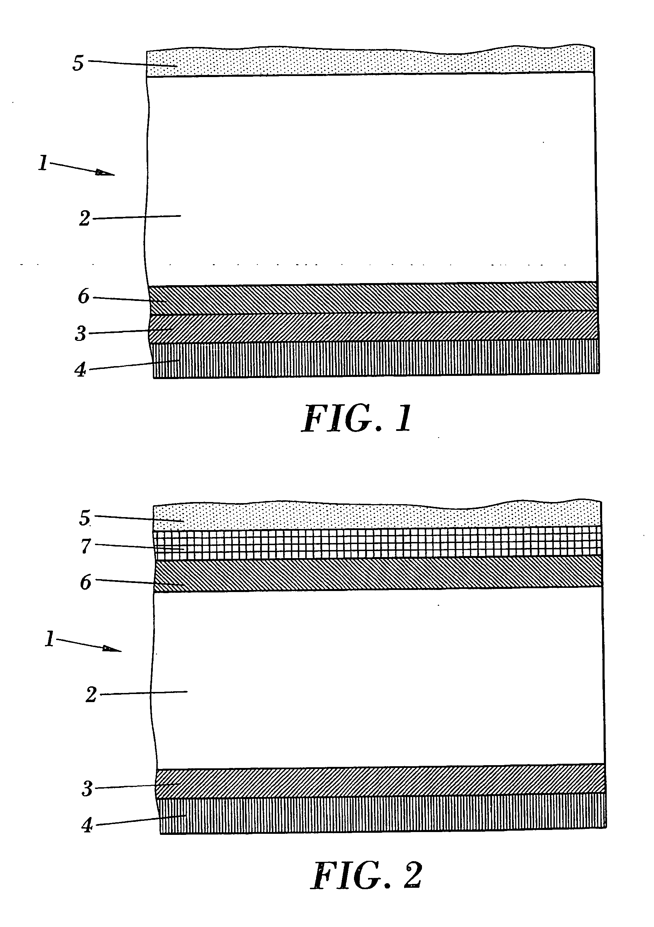

Figure 1 shows a cross section of a label (1) according to a preferred embodiment of the present invention, which comprises five layers or elements: one layer or carrier element, preferably plastic, formed of a layer of thermal shrinkage material (2), and four layers or elements for coating said carrier: a film of antistatic material (5), an ink print (6), a film of warm melt material (3) and a film of hygroscopic coating (4). We will now go on to describe these elements.

A layer of thermal shrinkage material (2) is chosen through being retractable or capable of shrinking in high temperature conditions, i.e. above approximately 70°C. This feature is fundamental in the labels of the present invention, as, once stuck on the surface of a container (for example, a returnable glass bottle), thanks to this property of shrinkage at certain temperatures the label is detachable from the container to which it is stuck by means of a bath in a hot fluid (i.e. a fluid that reaches the temperature as of which the layer of thermal shrinkage material retracts).

As fluid for the washing and detachment of the label from the labelled container, an aqueous solution, which may optionally comprise a base, is chosen. In one particular embodiment, said base is sodium hydroxide or soda. Preferably, a bath of sodium hydroxide is chosen at a concentration of 2% by weight and at a temperature of 70°C or above, more preferably between 70-80°C. This fluid however may also be, for instance, water. Thus, the actual temperature of the fluid applied will cause the layer of thermal shrinkage material to start to retract, thereby facilitating the detachment of the label from the container.

In the event of the hot fluid being sodium hydroxide, as the layer of thermal shrinkage material (2) gradually retracts, the sodium hydroxide will start to act, causing the detachment of the label (1) from the container, as the sodium hydroxide acts on the adhesive compound used to stick the label onto the container. Said adhesive compound may be any conventional adhesive compound, typically casein. Thus, when the material is retracting or shrinking, openings are produced in the sides of the label wherein the sodium hydroxide may penetrate and attack the adhesive compound.

When we talk of retractable or shrinkage capability features, we refer to the capability to retract transversely, longitudinally, or in both directions at the same time. Normally, this high-temperature shrinkage capability appears after a process of stretching the layer in question. This stretching of the layer takes place in at least one direction, transversely or longitudinally, or in both directions.

A layer of thermal shrinkage material (2) with a density of 1.25-1.50 gr/cm³ is preferably chosen. This means that, since the density of the layer of thermal shrinkage material (2) is higher than that of water (1 gr/cm³), the labels (1) detached may go to the bottom of the fluid bath, which will permit their subsequent collection by the customary means.

The layer of thermal shrinkage material (2) chosen for the manufacture of the label (1) may be any polymeric plastic substrate that is retractable in high temperature conditions. In one particular embodiment, the plastic polymeric substrate for the manufacture of the label (1) is selected from among the following plastic polymer substrates:
- PVC or polyvinyl chloride, preferably with thicknesses between 30-100 microns and more preferably with retraction percentages between 30-66%, both in the transverse and in the longitudinal direction;
- PET or polystyrene terephthalate, preferably with thicknesses between 30-100 microns and more preferably with retraction percentages between 30-75%, both in the transverse and in the longitudinal direction;
- OPS or oriented polystyrene, preferably with thicknesses between 30-100 microns and more preferably with retraction percentages between 30-50%, both in the transverse and in the longitudinal direction.

In addition, the layer of thermal shrinkage material (2) may be transparent, translucent or opaque.

The adhesive compound used to stick the label (1) to the container is not the object of the present invention, as it does not form part of the label (1) in itself but of the process of adhesion or gluing of the label (1) to the container or bottle in question. The adhesive compounds for carrying out this process are known by experts on the technique. Said adhesive compound may be any conventional adhesive compound, such as casein or its by-products, or else synthetic resins, such as acrylic and polyvinyl acetate resins and their mixtures.

The second element of the label (1) in figure 1 is the film of hygroscopic coating (4). This interacts with the adhesive compound used to stick the label (1) to the container (for example, to the returnable glass bottle), absorbing the water of said adhesive compound.

On the market there are different products with a high level of hygroscopicity, amongst which we may mention polyvinyl alcohols, polyacrylamides, sodium polyacrylates or cellulose derivatives, such as hydroxyethylcelluloses, carboxymethylcelluloses, etc. All these have the special feature of being capable of absorbing moisture, so they are indicated for retaining the water contained in the adhesive compounds.

The film of hygroscopic coating (4) of the label (1) preferably comprises a compound selected from among an acrylic, vinyl, polyacrylamide or polyacrylate base and mixtures of same, and more preferably a sodium polyacrylate. Said sodium polyacrylate is available on the market under different names, and of this there are basically two varieties, cross-linked and non-cross-linked.

Cross-linked sodium polyacrylate has the disadvantage that it absorbs water immediately, so it is more difficult to prepare a solution that may be applied to the thermal shrinkage material (2) that forms the label (1) in figure 1. In the event of application being achieved, the surface thus obtained would remain tacky, as it would tend to interact with environmental humidity.

To overcome this problem, we have opted for using non-cross-linked alkaline polyacrylates, known commonly as "alkali-swellable polyacrylates" (ASPA). Normally presented in aqueous solution, these are easily usable as an overprint varnish, so that conventional machinery may be used for their application.

Once applied, these non-cross-linked polyacrylates are inert and do not interact with environmental humidity, but they have the special feature that, upon coming into contact with alkaline environments, they tend slowly but surely to undergo a cross-linking process, which increases their tendency to absorb water. This feature is utilised in the manufacture of our label (1), since the glues or adhesive compounds used for the adhesion of plastic polymer labels (1) to glass or plastic normally have a high degree of alkalinity due to their chemical composition. In these conditions, when the polyacrylate comes into contact with the adhesive, the alkaline environment causes the polyacrylate to start to crosslink and to absorb water from the glue or adhesive compound.

We now go on to describe the film of warm melt material (3). This is configured to be situated between the layer of thermal shrinkage material (2) and the hygroscopic film (4), so that the heating (upon coming into contact with a hot washing fluid) of said film of warm melt material (3) brings about its softening, which in turn allows the layer of thermal shrinkage material (2) to retract in at least one direction, facilitating the removal of the label from the container upon coming into contact with a hot washing fluid.

The film of warm melt material (3) has the great advantage of facilitating the detachment of the label (1), even when it has been stuck to the container or bottle for a very long time. It has been observed that, in the absence of this film of warm melt material (3), when the container or bottle has been labelled for a very long period of time, the label may have become so tightly and perfectly stuck to the container that the layer of thermal shrinkage material (2) is not capable of retracting or shrinking when coming into contact with the hot fluid, as the bonding force between the container and the label is greater than the force needed to be able to retract the layer of thermal shrinkage material, and therefore retract the label. As a solution to this problem, we propose an intermediate layer or film (3) of a warm melt material that acts at the temperature of the fluid bath. Through softening, this warm melt material will permit the layer of thermal shrinkage material to retract, giving rise to openings in the sides of the label (1).

In the context of the present invention, a warm melt material is taken to be a material that melts or softens under the action of heat.

A film of warm melt material (3) is chosen that begins to act preferably at temperatures of 70°C or above, and more preferably between 70-80°C. At these temperatures, the film of warm melt material (3) undergoes a softening, which in turn causes the layer of thermal shrinkage material (2), the manufacturing base of the label (1), to be able to retract without any opposing force. Otherwise, in the absence of said film of warm melt material (3) and in the event of the label being stuck to the container for a long time, the layer of thermal shrinkage material (2) undergoes such retraction-opposing force, exerted by the adhesive compound which unites the label (1) and the container tightly, that the label (1) cannot be successfully detached from the container.

As the film of warm melt material (3), those resins are chosen that are sensitive to temperature, such as polyvinyl alcohol, ethyl-vinyl acetate (EVA resins), acrylic resins, vinyl resins and the like, as well as their mixtures, preferably ethyl-vinyl acetate. For the proper functioning of the label (1), more preferably films are chosen that have 0.5-7 gr/m². The warm melt materials chosen usually come in the form of warm melt varnish, both water- and solvent-based.

Experts on the matter will appreciate that, upon coming into contact with hot washing fluid, this film of warm melt material (3) will soften due to the heat, enabling the layer of thermal shrinkage material (2) to retract, facilitating the detachment of the label (1), even in the cases in which the label has been stuck for a long time to the container that we want returned. The problem posed by known labels is thereby resolved.

We now go on to describe the rest of the layers or elements We now go on to describe the rest of the layers or elements comprised in the label (1) in figure 1.

The function of the film of antistatic material (5) is to ensure that the label (1) remains free from static electricity and has suitable efficient machinability. The film of antistatic material (5), normally in the form of varnish, is deposited on the face of the layer of thermal shrinkage material (2) which is going to be exposed to the environment when stuck to the container or bottle. That is to say, it is deposited on the face of the layer of thermal shrinkage material (2) opposite the sticking surface. Preferably depositions of antistatic varnish are chosen in proportions between 0.10-2 gr/m².

The basic composition of antistatic material is in solution form, either a basic aqueous solution or else an organic aqueous solution, which comprises:
- a resin soluble in water or in an organic solvent, which has the function of assuring suitable viscosity in the solution as a whole, as well as keeping all the other products making up the varnish in suspension. Said soluble resin is preferably chosen from the group made up of acrylic, polyurethane, vinyl and cellulose based resins and the like and their mixtures. In one particular embodiment, the antistatic material chosen contains between 2-25% by weight of resin in relation to the total weight of the film of antistatic material (5);
- an antistatic agent: it is the one responsible for creating a conductor layer that will permit the elimination or dissipation of the static electricity. As an antistatic agent, we will preferably use those selected from the family of the alkyl aryl sulphonates, quaternary ammonium salts and their mixtures. The antistatic agents have a dual role, as they lower the surface tension and bring about the elimination of the static charge. The antistatic material chosen preferably contains between 2-15% by weight of antistatic agent in respect of the total weight of the film of antistatic material (5);
- a filler: it may be a conventional filler, both of the organic and inorganic type, and its function is that of bringing down costs in the manufacturing process. Preferably, either talc or calcium carbonate and their mixtures are chosen.

Although the label (1) preferably comprises this film of antistatic material (5), in one particular embodiment, this film of antistatic material (5) is not applied to the label (1).

All kinds of graphic expressions, signs and/or characters of an identifying, advertising, decorative, etc. nature may be printed on the layer of thermal shrinkage material (2) of the label (1), on its face opposite to the face of the layer of thermal shrinkage material (2) which is exposed to the air or environment or protected by the film of antistatic material (5). This feature should not be taken as restrictive, as the other face of the layer of thermal shrinkage material (2) could be chosen for printing such motifs.

The printing of the graphic motif (6) may be done by any of the techniques familiar to experts on the matter, such as gravure printing, flexo printing or web offset. In the event of the layer of thermal shrinkage material (2) being transparent or translucent, the mirror printing process (6) should be used, i.e. on the part of the material that is not going to be in contact with the environment. If the layer of thermal shrinkage material (2) is opaque, the printing should be done on the part of the material that is going to be in contact with the environment.

The printing process (6) is done with inks familiar to experts on the matter, such as nitrocellulose, vinyl, acrylic or polyurethane based inks and their mixtures, or the like.

Preferably but not exclusively, a rotary gravure printing press is used for the printing process (6) with an in-line sheeter that comprises gravure printing cylinders specially engraved for one of the products that we wish to make.

Although the label (1) preferably comprises this ink print (6), in one particular embodiment no printing of graphic motifs or characters is applied to the label (1).

The label (1) in figure 1 represents a preferred embodiment of the present invention, which comprises five layers or elements: a film of antistatic material (5), a layer of thermal shrinkage material (2), an ink print (6), a film of warm melt material (3) and a film of hygroscopic coating (4). Experts on the matter will appreciate, however, that a basic configuration of the label (1) only comprises a layer of thermal shrinkage material (2), which is the basic substrate of the label (1), a film of hygroscopic coating (4) and the film of warm melt material (3) which gives it the properties capable of resolving the problem that arises from known labels.

Figure 2 represents a label (1) according to another possible embodiment of the present invention, which is differentiated from the label in figure 1 in which the printing of the graphic motif (6) is done on the face of the layer of thermal shrinkage material (2) which is exposed to the air or environment or protected by the film of antistatic material (5). As mentioned above, this face of the layer of thermal shrinkage material (2) is chosen in those cases in which said layer of thermal shrinkage material (2) is not transparent or translucent. The layer of thermal shrinkage material (2) in figure 2 is preferably a white polymer carrier. It is, therefore, opaque.

Optionally, a film of overprint varnish (7) is deposited on the print (6) in figure 2 and this, in turn, is covered with the film of antistatic material (5). This aspect is observed in figure 2.

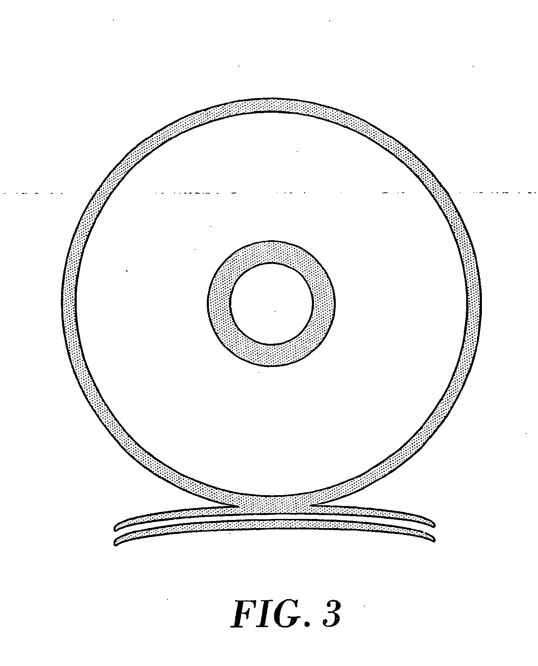

Figure 3 shows an example of detachment by thermal shrinkage of the label (1) that is the object of the invention stuck to a container, which in this case is a bottle.

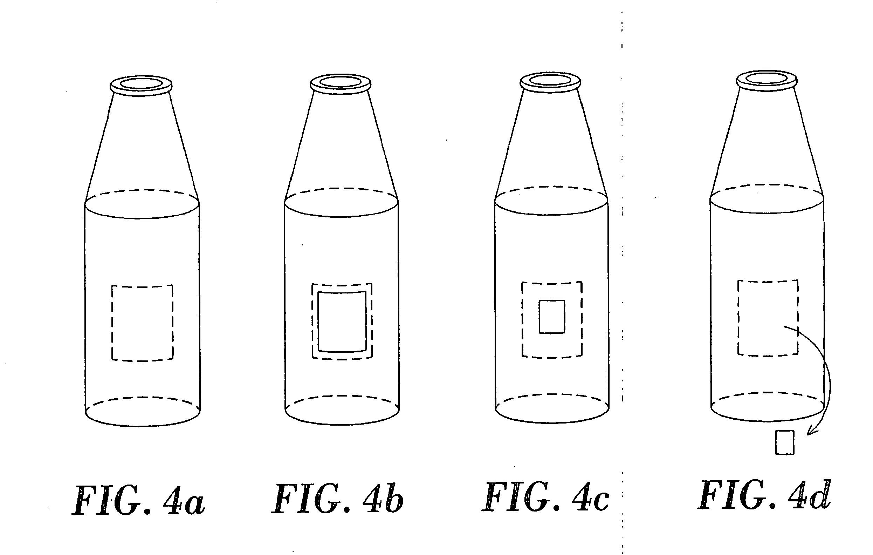

Figure 4 shows a detailed example of this detachment, exemplified in four steps: figure 4a shows the bottle with the label stuck before being subjected to the hot fluid bath; figure 4b shows the bottle being subjected to a temperature between 75-80°. As may be observed, the label starts to contract. Figure 4c shows how the label contracts more and more. Figure 4d shows how the label is detached from the bottle.

We now show an illustrative example of the working of the label of the present invention. This example should be taken as non-restrictive and merely illustrative of the label of the present invention:

This laboratory test example shows how the addition of the warm melt adhesive assures a detachment time appropriate for the needs of a bottler using returnable bottles.

The test was carried out with a bath temperature of 80±2°C and a 1.5% soda content. The results were as follows:

The labels were stuck to the bottle in an industrial labelling process using acrylic-based (synthetic) glue.

15 days passed until proceeding with the laboratory test and checking the ease of detachment.

In the first three cases the labels were made without a film of warm melt varnish, while in the last case the film of warm melt varnish was included. We observe that the test performance without warm melt varnish and with warm melt varnish is completely different, as only the last case is acceptable in an industrial washing process thanks to the speed of detachment of the label from the container. The first three cases are unacceptable, however, two of them because the label is not successfully detached and the other because it takes a lot longer than in the case of having warm melt varnish.

| SAMPLE | DETACHMENT |
|---|---|
| PVC 50 microns, transp. | 14' 43" |
| PET 50 microns, transp. | Not detached |
| BOPP 50 microns, transp. | Not detached |
| PVC with warm melt coating | 1' 40" |

The purpose of the present invention is also the above-described label (1) manufacturing process, as well as the device for making said label (1).

In the light of this description and set of figures, an expert on the matter will be able to appreciate that the invention has been described according to some of the preferred embodiments of same, but multiple variations may be introduced into said preferred embodiments without departing from the object of the invention as claimed.

## Claims

1. Label (1) for being stuck to a container by means of an adhesive compound and for detachment from said container by means of the application of a hot washing fluid, which comprises a layer of thermal shrinkage material (2), a film of hygroscopic coating (4) capable of absorbing at least part of the water of the adhesive compound once the label (1) has been stuck to the container, **characterised in that** it further comprises a film of warm melt material (3) that melts or soften under the action of heat, wherein the film of warm melt material (3) is arranged between the layer of thermal shrinkage material (2) and the film of hygroscopic coating (4), so that the softening of the film of warm melt material (3) by heat permits the layer of thermal shrinkage material (2) to retract in at least one direction upon coming into contact with a hot washing fluid.

2. Label (1) according to claim 1, wherein the film of warm melt material (3) starts to act at temperatures of 70°C or above 70°C, preferably between 70° and 80°C.

3. Label (1) according to either of the preceding claims, wherein the film of warm melt material (3) comprises a temperature-sensitive resin selected from among: a polyvinyl alcohol, an ethyl-vinyl acetate, an acrylic resin, a vinyl resin and their mixtures, preferably an ethyl-vinyl acetate.

4. Label (1) according to any of the preceding claims, wherein the film of warm melt material (3) is either aqueous-based or solvent-based and has a weight between 0.5 and 7 gr/m³.

5. Label (1) according to any of the preceding claims, wherein the layer of thermal shrinkage material (2) is a plastic polymer.

6. Label (1) according to claim 5, wherein said plastic polymer is selected from among: a vinyl chloride, a polystyrene terephthalate, an oriented polystyrene and their mixtures.

7. Label (1) according to any of the preceding claims, wherein the layer of thermal shrinkage material (2) has a thickness between 30 and 100 microns and a retraction percentage between 30-75% in a transverse and/or longitudinal direction.

8. Label (1) according to any of the preceding claims, wherein the film of hygroscopic coating (4) is selected from among: an acrylic base, a vinyl base, a polyacrylamide base, a polyacrylate base and their mixtures.

9. Label (1) according to claim 8, wherein the film of hygroscopic coating (4) is a sodium polyacrylate.

10. Label (1) according to claim 9, wherein the film of hygroscopic coating (4) is a non-cross-inked sodium polyacrylate.

11. Label (1) according to any of the preceding claims, wherein the label (1) further comprises a film of antistatic material (5) configured so as to be deposited on the face of the layer of thermal shrinkage material (2) which is exposed to the environment when the label (1) is stuck to the container or on the opposite face of the layer of thermal shrinkage material (2).

12. Label (1) according to claim 11, wherein the film of antistatic material (5) is deposited on the layer of thermal shrinkage material (2) in a concentration of between 0.10 and 2 gr/m².

13. Label (1) according to either of claims 11 or 12, wherein the film of antistatic material (5) comprises a resin in a proportion lying between 2% and 25% by weight in relation to the overall weight of said film (5) selected from among acrylic, polyurethane, vinyl and cellulose resins and their mixtures.

14. Label (1) according to any of claims 11 to 13, wherein the film of antistatic material (5) comprises an antistatic agent in a proportion lying between 2% and 15% by weight in respect of the overall weight of said film (5) and the antistatic agent is chosen from among the alkyl aryl sulphonates, quaternary ammonium salts and their mixtures.

15. Label (1) according to any of claims 11 to 14, wherein the film of antistatic material (5) comprises a filler, which may be either of the organic or inorganic type and which is chosen from among talc, calcium carbonate and their mixtures.

16. Label (1) according to any of the preceding claims, wherein a graphic motif (6) is printed on the layer of thermal shrinkage material (2) by any of the following methods: gravure printing, flexo printing or web offset.

17. Label (1) according to claim 16, wherein the printing process (6) is done with inks selected from among: nitrocellulose, vinyl, acrylic, and polyurethane based inks and their mixtures.

18. Method for the manufacture of a label (1) for being stuck to a container by means of an adhesive compound and for detachment from said container by means of the application of a hot washing fluid **characterized in that** it comprises the arrangement of:
- a layer of thermal shrinkage material (2),
- a film of hygroscopic coating (4) capable of absorbing at least part of the water of the adhesive compound once the label (1) has been stuck to the container, and
- a film of warm melt material (3) that melts or soften under the action of heat,
wherein the film of warm melt material (3) is arranged between the layer of thermal shrinkage material (2) and the film of hygroscopic coating (4), so that the softening of the film of warm melt material (3) by heat permits the layer of thermal shrinkage material (2) to retract in at least one direction upon coming into contact with the hot washing fluid.

## Patentansprüche

1. Etikett (1) zum Aufkleben auf einen Behälter mittels einer Klebeverbindung und zur Ablösung von dem Behälter mittels Anwendung eines heißen Waschfluids, welches eine Schicht eines thermischen Schrumpfungsmaterials (2), einen Film einer hygroskopischen Beschichtung (4), die in der Lage ist, wenigstens einen Teil des Wassers der Klebeverbindung zu absorbieren, sobald das Etikett (1) auf den Behälter aufgeklebt worden ist, umfasst, **dadurch gekennzeichnet, dass** es ferner einen Film eines warmschmelzenden Materials (3) umfasst, das unter der Einwirkung von Wärme schmilzt oder erweicht, worin der Film des warmschmelzenden Materials (3) zwischen der Schicht des thermischen Schrumpfungsmaterials (2) und dem Film einer hygroskopischen Beschichtung (4) angeordnet ist, sodass das Erweichen des Films des warmschmelzenden Materials (3) durch Wärme es der Schicht des thermischen Schrumpfungsmaterials (2) erlaubt, beim Inkontaktkommen mit einem heißen Waschfluid, sich in wenigstens eine Richtung zurückzuziehen.

2. Etikett (1) gemäß Anspruch 1, worin der Film des warmschmelzenden Materials (3) bei Temperaturen von 70 °C oder oberhalb von 70 °C, vorzugsweise zwischen 70 und 80 °C, beginnt, aktiv zu werden.

3. Etikett (1) gemäß einem der vorstehenden Ansprüche, worin der Film des warmschmelzenden Materials (3) ein temperaturempfindliches Harz ausgewählt aus einem Polyvinylalkohol, einem Ethyl-Vinylacetat, einem Acrylharz, einem Vinylharz und deren Mischungen, vorzugsweise ein Ethyl-Vinylacetat, umfasst.

4. Etikett (1) gemäß einem der vorstehenden Ansprüche, worin der Film des warmschmelzenden Materials (3) entweder wasserbasiert oder lösungsmittelbasiert ist und ein Gewicht zwischen 0,5 und 7 g/m³ aufweist.

5. Etikett (1) gemäß einem der vorstehenden Ansprüche, worin die Schicht des thermischen Schrumpfungsmaterials (2) ein Plastikpolymer ist.

6. Etikett (1) gemäß Anspruch 5, worin das Plastikpolymer ausgewählt ist aus einem Vinylchlorid, einem Polystyrolterephthalat, einem gerichteten Polystyrol und deren Mischungen.

7. Etikett (1) gemäß einem der vorstehenden Ansprüche, worin die Schicht des thermischen Schrumpfungsmaterials (2) eine Dicke zwischen 30 und 100 µm und einen Rückzugsprozentsatz zwischen 30 bis 75 % in einer Quer- und/oder Längsrichtung aufweist.

8. Etikett (1) gemäß einem der vorstehenden Ansprüche, worin der Film der hygroskopischen Beschichtung (4) ausgewählt ist aus einer Acrylbasis, einer Vinylbasis, einer Polyacrylamidbasis, einer Polyacrylatbasis und deren Mischungen.

9. Etikett (1) gemäß Anspruch 8, worin der Film der hygroskopischen Beschichtung (4) ein Natriumpolyacrylat ist.

10. Etikett (1) gemäß Anspruch 9, worin der Film der hygroskopischen Beschichtung (4) ein nicht-vernetztes Natriumpolyacrylat ist.

11. Etikett (1) gemäß einem der vorstehenden Ansprüche, worin das Etikett (1) ferner einen Film eines antistatischen Materials (5) umfasst, das so ausgestaltet ist, dass es auf der Fläche der Schicht des thermischen Schrumpfungsmaterials (2), die der Umgebung ausgesetzt ist, wenn das Etikett (1) auf den Behälter geklebt ist, oder auf die gegenüberliegende Fläche der Schicht des thermischen Schrumpfungsmaterials (2) abgelagert wird.

12. Etikett (1) gemäß Anspruch 11, worin der Film des antistatischen Materials (5) auf der Schicht des thermischen Schrumpfungsmaterials (2) in einer Konzentration zwischen 0,10 und 2 g/m² abgelagert ist.

13. Etikett (1) gemäß einem der Ansprüche 11 oder 12, worin der Film des antistatischen Materials (5) ein Harz in einem Anteil, der zwischen 2 Gew.-% und 25 Gew.-% bezogen auf das Gesamtgewicht des Films (5) liegt, ausgewählt aus Acryl-, Polyurethan-, Vinyl- und Celluloseharzen und deren Mischungen umfasst.

14. Etikett (1) gemäß einem der Ansprüche 11 bis 13, worin der Film des antistatischen Materials (5) ein antistatisches Mittel in einem Anteil umfasst, der zwischen 2 Gew.-% und 15 Gew.-% bezogen auf das Gesamtgewicht des Films (5) liegt und das antistatische Mittel ausgewählt ist aus Alkylarylsulphonaten, quartären Ammoniumsalzen und deren Mischungen.

15. Etikett (1) gemäß einem der Ansprüche 11 bis 14, worin der Film des antistatischen Materials (5) einen Füllstoff umfasst, der vom organischen oder anorganischen Typ sein kann und ausgewählt ist aus Talk, Calciumcarbonat und deren Mischungen.

16. Etikett (1) gemäß einem der vorstehenden Ansprüche, worin ein graphisches Motiv (6) auf die Schicht des thermischen Schrumpfungsmaterials (2) mittels eines der folgenden Verfahren aufgedruckt ist: Tiefdruck, Flexodruck oder Rollenoffset.

17. Etikett (1) gemäß Anspruch 16, worin das Druckverfahren (6) mit Tinten ausgewählt aus nitrocellulose-, vinyl-, acryl- und polyurethanbasierten Tinten und deren Mischungen durchgeführt wird.

18. Verfahren zur Herstellung eines Etiketts (1) zum Aufkleben auf einen Behälter mittels einer Klebeverbindung und zur Ablösung von dem Behälter mittels Anwendung eines heißen Waschfluids, **dadurch gekennzeichnet, dass** es die Anordnung von
einer Schicht eines thermischen Schrumpfungsmaterials (2),
einem Film einer hygroskopischen Beschichtung (4), der in der Lage ist, wenigstens einen Teil des Wassers der Klebeverbindung zu absorbieren, sobald das Etikett (1) auf den Behälter aufgeklebt ist, und
einen Film eines warmschmelzenden Materials (3), das unter der Einwirkung von Wärme schmilzt oder erweicht, umfasst,
wobei der Film des warmschmelzenden Materials (3) zwischen der Schicht des thermischen Schrumpfungsmaterials (2) und dem Film der hygroskopischen Beschichtung (4) angeordnet ist, sodass das Erweichen des Films des warmschmelzenden Materials (3) durch Wärme, es der Schicht des thermischen Schrumpfungsmaterials (2) erlaubt, beim Inkontaktkommen mit dem heißen Waschfluid sich in wenigstens einer Richtung zurückzuziehen.

## Revendications

1. Etiquette (1) à coller sur un contenant au moyen d'un composé adhésif et à détacher dudit contenant au moyen de l'application d'un fluide de lavage chaud, qui comprend une couche de matériau de retrait thermique (2), un film de revêtement hygroscopique (4) capable d'absorber au moins une partie de l'eau du composé adhésif une fois que l'étiquette (1) a été collée sur le contenant, **caractérisée en ce qu'**elle comprend en outre un film de matériau thermofusible (3) qui fond ou s'assouplit sous l'action de la chaleur, dans laquelle le film de matériau thermofusible (3) est agencé entre la couche de matériau de retrait thermique (2) et le film de revêtement hygroscopique (4), de sorte que l'assouplissement du film de matériau thermofusible (3) par la chaleur permet à la couche de matériau de retrait thermique (2) de se rétracter dans au moins une direction lorsqu'elle vient en contact avec un fluide de lavage chaud.

2. Etiquette (1) selon la revendication 1, dans laquelle le film de matériau thermofusible (3) commence à agir à des températures de 70 °C ou de plus de 70 °C, de préférence entre 70 et 80 °C.

3. Etiquette (1) selon l'une quelconque des revendications précédentes, dans laquelle le film de matériau thermofusible (3) comprend une résine sensible à la température choisie parmi : un poly(alcool vinylique), un éthyl-acétate de vinyle, une résine acrylique, une résine vinylique et leurs mélanges, de préférence un éthyl-acétate de vinyle.

4. Etiquette (1) selon l'une quelconque des revendications précédentes, dans laquelle le film de matériau thermofusible (3) est soit à base d'eau, soit à base de solvant et a un poids entre 0,5 et 7 g/m3.

5. Etiquette (1) selon l'une quelconque des revendications précédentes, dans laquelle la couche de matériau de retrait thermique (2) est un polymère plastique.

6. Etiquette (1) selon la revendication 5, dans laquelle ledit polymère plastique est choisi parmi : un chlorure de vinyle, un poly(téréphtalate de styrène), un poly(styrène) orienté et leurs mélanges.

7. Etiquette (1) selon l'une quelconque des revendications précédentes, dans laquelle la couche de matériau de retrait thermique (2) a une épaisseur entre 30 et 100 microns et un pourcentage de retrait entre 30 et 75 % dans une direction transversale et/ou longitudinale.

8. Etiquette (1) selon l'une quelconque des revendications précédentes, dans laquelle le film de revêtement hygroscopique (4) est choisi parmi : une base acrylique, une base vinyle, une base poly(acrylamide), une base poly(acrylate) et leurs mélanges.

9. Etiquette (1) selon la revendication 8, dans laquelle le film de revêtement hygroscopique (4) est un poly(acrylate de sodium).

10. Etiquette (1) selon la revendication 9, dans laquelle le film de revêtement hygroscopique (4) est un poly(acrylate de sodium) non réticulé.

11. Etiquette (1) selon l'une quelconque des revendications précédentes, dans laquelle l'étiquette (1) comprend en outre un film de matériau antistatique (5) configuré de façon à être déposé sur la face de la couche de matériau de retrait thermique (2) qui est exposée à l'environnement lorsque l'étiquette (1) est collée sur le contenant ou sur la face opposée de la couche de matériau de retrait thermique (2).

12. Etiquette (1) selon la revendication 11, dans laquelle le film de matériau antistatique (5) est déposé sur la couche de matériau de retrait thermique (2) dans une concentration entre 0,10 et 2 g/m².

13. Etiquette (1) selon l'une ou l'autre des revendications 11 ou 12, dans laquelle le film de matériau antistatique (5) comprend une résine dans une proportion se trouvant entre 2 % et 25 % en poids par rapport au poids total du film (5) choisie parmi des résines acryliques, poly(uréthane), vinyliques et cellulosiques et leurs mélanges.

14. Etiquette (1) selon l'une quelconque des revendications 11 à 13, dans laquelle le film de matériau antistatique (5) comprend un agent antistatique dans une proportion se trouvant entre 2 % et 15 % en poids par rapport au poids global dudit film (5) et l'agent antistatique est choisi parmi les alkylarylsulfonates, les sels d'ammonium quaternaire et leurs mélanges.

15. Etiquette (1) selon l'une quelconque des revendications 11 à 14, dans laquelle le film de matériau antistatique (5) comprend une charge, qui peut être de type soit organique, soit inorganique et qui est choisie parmi le talc, le carbonate de calcium et leurs mélanges.

16. Etiquette (1) selon l'une quelconque des revendications précédentes, dans laquelle un motif graphique (6) est imprimé sur la couche de matériau de retrait thermique (2) par l'une quelconque des méthodes suivantes : héliogravure, impression flexographique ou impression sur rotative offset.

17. Etiquette (1) selon la revendication 16, dans laquelle le processus d'impression (6) est réalisé avec des encres choisies parmi : des encres à base de nitrocellulose, de vinyle, d'acrylique et de poly(uréthane) et leurs mélanges.

18. Procédé de fabrication d'une étiquette (1) à coller sur un contenant au moyen d'un composé adhésif et à décoller dudit contenant au moyen de l'application d'un fluide de lavage chaud, **caractérisé en ce qu'**il comprend l'agencement :
- d'une couche de matériau de retrait thermique (2),
- d'un film de revêtement hygroscopique (4) capable d'absorber au moins une partie de l'eau du composé adhésif une fois que l'étiquette (1) a été collée sur le contenant, et
- un film de matériau thermofusible (3) qui fond ou s'assouplit sous l'action de la chaleur,
dans lequel le film de matériau thermofusible (3) est agencé entre la couche de matériau de retrait thermique (2) et le film de revêtement hygroscopique (4), de sorte que l'assouplissement du film de matériau thermofusible (3) par la chaleur permet à la couche de matériau de retrait thermique (2) de se rétracter dans au moins une direction lorsqu'elle vient en contact avec le fluide de lavage chaud.
